# EUROPÄISCHE PATENTSCHRIFT

(11) **EP 0 868 735 B1**
(45) Veröffentlichungstag und Bekanntmachung des Hinweises auf die Patenterteilung: **25.08.1999**
(21) Anmeldenummer: 96946056.7
(22) Anmeldetag: 09.12.1996
(51) Int. Cl.: H01H 50/32

(54) **SCHALTGERÄTEEINHEIT**
SWITCHGEAR UNIT
UNITE D'APPAREILLAGE DE COMMUTATION

(30) Priorität: 22.12.1995 DE 19548480
(43) Veröffentlichungstag der Anmeldung: 07.10.1998
(73) Patentinhaber: SIEMENS AKTIENGESELLSCHAFT, 80333 München (DE)
(72) Erfinder: DREXLER, Johann, D-92421 Schwandorf (DE); SCHMIDT, Manfred, D-92289 Ursensollen (DE)
(86) Internationale Anmeldenummer: DE9602357
(87) Internationale Veröffentlichungsnummer: WO9723889

(56) Entgegenhaltungen:
- DE-A- 2 440 361
- DE-A- 3 528 948
- DE-A- 4 142 179
- DE-B- 1 147 299
- US-A- 4 544 814

## Beschreibung

Die Erfindung bezieht sich auf eine Schaltgeräteeinheit aus einem ersten und einem zweiten gemeinsam mit einer Wendekombination versehenen Schaltgerät.

Aus der DE 11 47 299 ist eine mechanische Verriegelungsvorrichtung für ein aus zwei nebeneinander angeordneten Elektromagneten mit zugehörigen, zur Kontaktbetätigung geradlinig bewegbaren Ankern bestehendes Wendeschütz für Drehstrommotoren bekannt. Als Verriegelungsvorrichtung sind hier ein oder mehrere Pendel zwischen den beiden Elektromagneten angeordnet, deren freies Ende mit je zwei Vorsprüngen versehen ist, die im Ruhezustand etwas in die Bewegungsbahn beider Anker hineinragen und bei Erregung des einen Elektromagnets einerseits von dessen angezogenen Anker aus dessen Bewegungsbahn hinausdrängt und andererseits - vollsperrend - in die Bewegungsbahn des anderen Ankers geschwenkt werden.

Die DE 24 40 361 B2 offenbart eine mechanische Verriegelung mit der parallel bewegliche Teile, z.B. die Schaltköpfe zweier Schütze, gegeneinander verriegelt werden können. Die mechanische Verriegelung weist ein T-förmiges Verriegelungsstück mit zwei gegenüberliegenden Lagerzapfen auf, die von Langlochführungslagern aufgenommen werden, welche sich jeweils in den beweglichen zu verriegelnden Teilen befinden. Das Gehäuse der mechanischen Verriegelung ragt in entsprechende Ausnehmungen der Gehäuse, z.B. Schaltergehäuse, die die beweglichen Teile enthalten. Das Verriegelungsgehäuse ist in dem Zwischenraum der Gehäuse mit den gegenseitig zu verriegelnden Teilen angeordnet.

In der DE-AS 11 47 299 ist eine mechanische Verriegelungsvorrichtung für zwei nebeneinander angeordnete Elektromagnete eines Wendeschützes beschrieben. Hier sind zwei Pendel zwischen beweglichen Kontaktträgern drehbar befestigt. Die freien Enden der Pendel sind durch Vorsprünge verbreitert, die die geradlinige Bewegung jeweils nur eines einzigen Kontakttragers gestatten, während der andere durch den in seine Bewegungsbahn gedrückten Vorsprung in Ruhestellung gehalten wird.

Die DE 41 42 179 A1 offenbart eine mechanische Verriegelungseinrichtung. Auch hier sollen mehrere nebeneinander gelagerte Schütze derart betrieben werden, daß nach dem Einschalten des einen Schützes das andere Schutz nicht schaltbar ist. Hierzu sind in den einander zugewandten und aneinander liegenden Seitenflächen der Schütze zwei Sperrklinken gelagert, von denen die eine Sperrklinke durch das Antriebsglied des einen Schutzes und die andere Sperrklinke durch das Antriebsglied des anderen Schutzes aus ihren Ausgangsstellungen derart verschwenkbar sind, daß die von den beiden Sperrklinken zuerst verschmutzte Sperrklinke die andere Sperrklinke bis nach Rückkehr in ihre Ausgangslage sperrt.

Die DE-A-4 142 179 offenbart eine Schaltgeräteeinheit aus einem ersten und einem zweiten gemeinsam mit einer Wendekombination versehenen Schaltgerät wobei das erste Schaltgerät (1) über dessen erster Verbindungsseitenwand mit dem zweiten Schaltgerät an dessen zweiter Verbindungsseitenwand verbunden ist.

Der Erfindung liegt die Aufgabe zugrunde, eine Schaltgeräteeinheit der obengenannten Art zu schaffen, die einfach aufgebaut ist und demnach eine einfache Montage und Demontage kundenseitig ermöglicht. Ein weiteres Ziel der Erfindung ist es, die Verschmutzungsgefahr etwa durch Öffnungen an der Frontseite der Schaltgeräte zu vermeiden. Die Ausrüstung mit einer Wendekombination soll möglichst ohne Veränderung des Gerätedesigns erreicht werden.

Die Hauptaufgabe wird erfindungsgemäß durch eine Schaltgeräteeinheit gemäß den Merkmalen nach Anspruch 1 gelöst. Die Wendekombination umfaßt hier ein Lager und einen in diesem schwenkbar gelagerten Anker. Das erste Schaltgerät ist über eine erste Verbindungsseitenwand mit dem zweiten Schaltgerät über eine zweite Verbindungsseitenwand verbunden. In den Verbindungsseitenwänden sind gegenüberliegend erste Schlitze vorhanden, in denen das Lager steckt. Zur Schwenkung des Ankers sind in den Verbindungsseitenwänden gegenüberliegend zweite Schlitze vorhanden. Dabei greift der Anker beim gleichzeitigen Betätigen beider Schaltgeräte in die Kontaktträger beider Schaltgeräte ein und verhindert ein Einschalten beider Schaltgeräte, während der Anker beim Betätigen eines der beiden Schaltgeräte in den Kontaktträger des anderen Schaltgeräts gedrückt wird und diesen verriegelt.

Eine vorteilhafte Weiterbildung der Erfindung besteht, wenn zur Verbindung der beiden Schaltgeräte Verbindungselemente vorhanden sind, die klammerartig Rippen an den Schaltgeraten umgreifen.

Vorteilhafterweise weisen die Verbindungselemente zwei äußere Schenkel zur Umklammerung der Rippen sowie einen Mittelzapfen auf, der in eine durch die Verbindungsseitenwände gebildete Ausnehmung formschlüssig eingreift.

Es ist weiterhin vorteilhaft, wenn das Lager formkodiert ausgebildet ist und die ersten Schlitze zur Aufnahme des Lagers der Formkodierung angepaßt sind. Auf diese Weise wird der lagerichtige Einbau der aus dem Lager und dem Anker bestehenden Baugruppe sichergestellt. Dies ist notwendig, damit beim Einbau der mechanischen Wendekombination die hierfür zueinander passenden Verbindungsseitenwände der beiden Schaltgeräte verbunden werden. Aufgrund der Lage der Kontaktträger in den beiden Schaltgeraten wird nur so sichergestellt, daß der Anker tatsächlich je nach Schwenkstellung in den Freiraum des einen oder anderen Kontakttragers der beiden Schaltgeräte eingreift.

Ein Ausführungsbeispiel der Erfindung wird im folgenden anhand einer Zeichnung näher erläutert. Es zeigen:
- FIG 1: zwei mit einer Wendekombination zu verbindende Schaltgeräte,
- FIG 2: eine Schaltkammer der Schaltgeräte gemäß FIG 1 mit zugehörigem Verbindungselement,
- FIG 3: eine Prinzipskizze mit den Kontaktträgern der beiden Schaltgeräte gemäß FIG 1 und der Stellung des Ankers bei gleichzeitigem Einschaltvorgang der beiden Schaltgeräte,
- FIG 4: die beiden Kontaktträger der beiden Schaltgeräte beim Einschaltvorgang des einen und der Verriegelung des anderen Schaltgeräts,
- FIG 5: die Positionierung von Lager und Anker zweier miteinander verbundener Schaltgeräte,
- FIG 6: die prinzipielle Lage und Ausbildung der Schlitze in beiden Schaltgeraten gemäß FIG 1 zur Aufnahme des formkodierten Lagers.

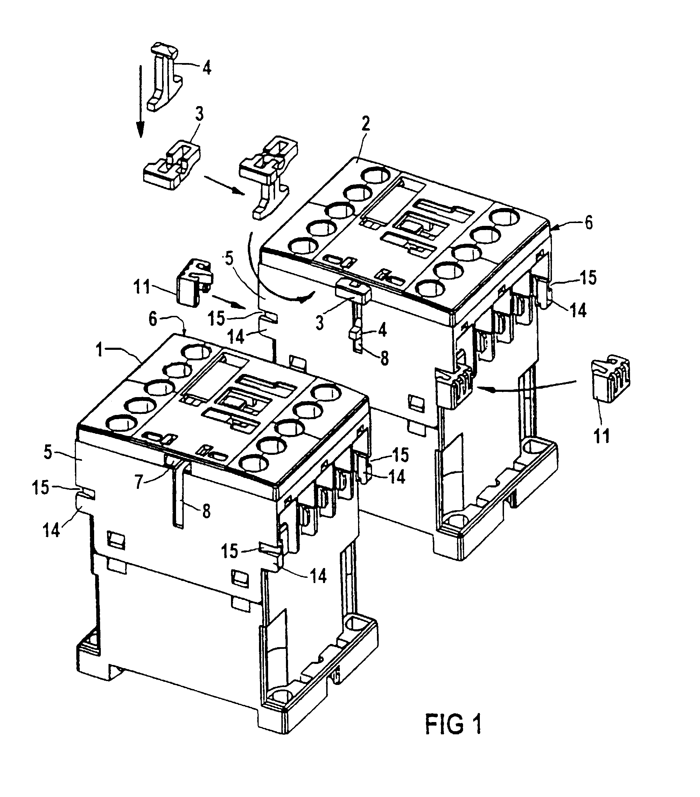

FIG 1 zeigt ein erstes 1 und ein zweites Schaltgerät 2, z.B. Schütze, die sich miteinander zu einer Schaltgeräteeinheit mit Wendekombination 3,4 verbinden lassen. Die Verbindung der beiden Schaltgeräte 1,2, die jeweils einen hier nicht dargestellten Kontaktträger mit beweglichen Kontakten besitzen, erfolgt über eine erste 5 bzw. zweite Verbindungsseitenwand 6 der beiden Schaltgeräte 1,2. Die Wendekombination besteht im wesentlichen aus einem Lager 3 und einem in diesem schwenkbar gelagerten Anker 4. Das Lager 3 steckt in gegenüberliegenden ersten Schlitzen 7 in der ersten 5 bzw. zweiten Seitenwand 6. Im Schwenkbereich des Ankers 4 sind in der ersten 5 bzw. zweiten Verbindungsseitenwand 6 zweite Schlitze 8 vorgesehen, über die der Anker 4 in Freisparungen 9 der Kontaktträger 10 eingreifen kann, wie noch näher erläutert wird.

Die Befestigung von Lager 3 und Anker 4 in seitlichen ersten 7 bzw. zweiten Schlitzen 8 bringt den Vorteil mit sich, daß die Schaltgeräte 1,2, unabhängig davon, ob sie in Verbindung mit einer Wendekombination eingesetzt werden, ohne eine frontseitige Öffnung auskommen und vom Gerätedesign her unverändert bleiben können. Zudem ist die Verschmutzungsgefahr dieser Ausführungsform gering.

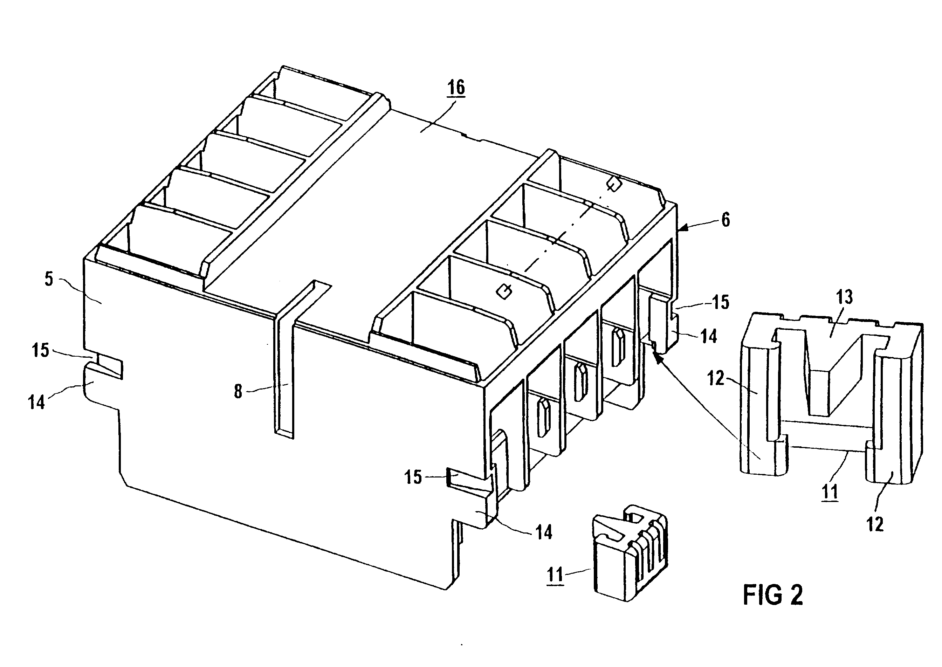

Der Zusammenbau der beiden Schaltgeräte 1 und 2 zu einer Schaltgeräteeinheit mit Wendekombination erfolgt durch Einsetzen von Lager 3 und Anker 4 in die dafür vorgesehenen ersten 7 bzw. zweiten Schlitze 8 in den Verbindungsseitenwänden 5,6 und der anschließenden Verbindung der Schaltgeräte 1,2 mittels spezieller Verbindungselemente, die hier als Klammern 11 ausgeführt sind. Die Klammern 11 weisen gemäß FIG 2 jeweils zwei Schenkel 12 und einen Mittelzapfen 13 auf. An der Ober- und Unterseite der Schaltgeräte 1,2 stehen Rippen 14 vor, die hier zur Schaltkammer 16 des Schaltgeräts 1 bzw. 2 gehören. Beim Aufdrücken jeweils einer Klammer 11 auf der Ober- bzw. Unterseite greift der Mittelzapfen 13 in eine durch die Rippen 14 gebildete Ausnehmung 15 formschlüssig ein und die beiden Schenkel 12 hintergreifen die Rippen 14 von ihrer Außenseite her. Dabei erfolgt eine Hinterrastung der Schenkel 12 an den Rippen 14. Die dabei zusammenwirkenden Bereiche sind durch eine Linie verbunden. Die Montage und in umgekehrter Reihenfolge die Demontage der Schaltgeräteeinheit läßt sich kundenseitig einfach durchführen.

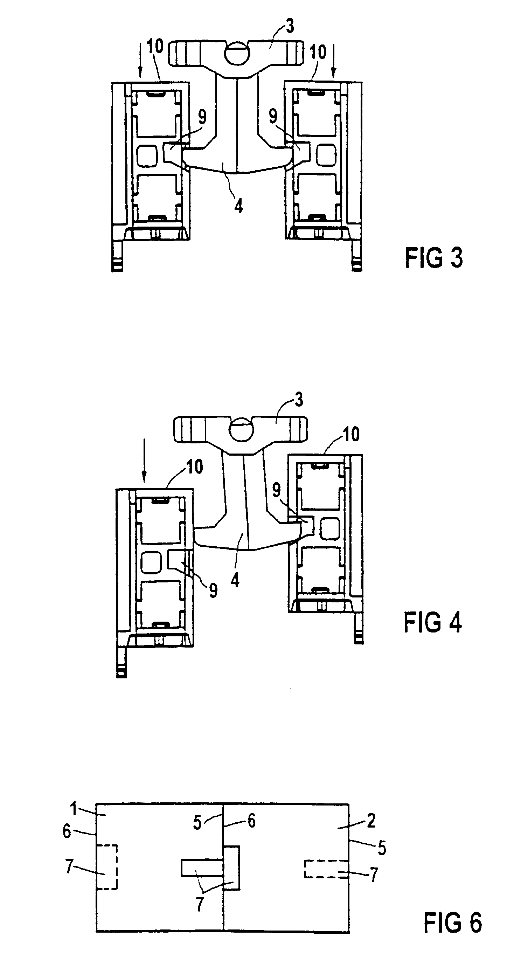

Die Funktion der Wendekombination läßt sich prinzipiell durch FIG 3 und 4 veranschaulichen. Hier sind die Kontaktträger 10, z.B. der beiden oben erwähnten Schaltgeräte 1,2 dargestellt. Die Stellung des Ankers 4 bestimmt die Funktion der Wendekombination. Bei gleichzeitigen Einschalten beider Schaltgeräte erfolgt die Sperre durch den Anker 4. Er greift in die Freisparungen 9 der Kontaktträger 10 gemäß FIG 3 ein und verhindert das Einschalten.

Beim Einschaltvorgang nur eines Schaltgeräts 1 oder 2 wird der Anker 4 in die Freisparung 9 des anderen Schaltgeräts 2 oder 1 gedrückt und dieses gemäß FIG 4 verriegelt. Die Wendekombination 3,4 stellt demnach sicher, daß niemals beide Schaltgeräte 1,2 sich im eingeschalteten Zustand befinden.

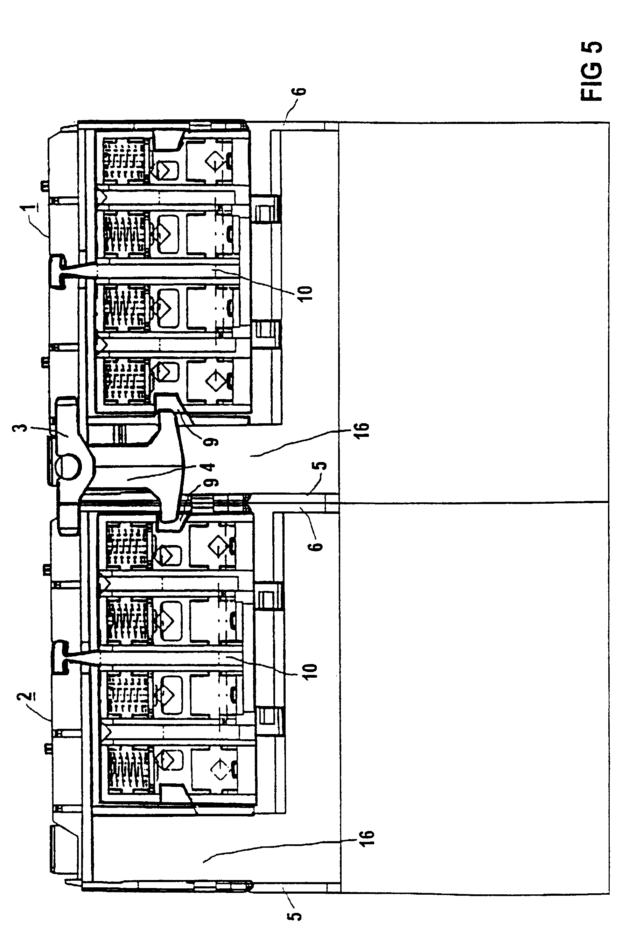

Die beiden vorzugsweise gleich aufgebauten Schaltgeräte 1,2 haben angrenzend an ihre eine Seitenwand 5 jeweils einen ersten Schlitz 7 zur Aufnahme der aus dem Anker 4 und dem Lager 3 bestehenden Baugruppe (siehe FIG 5). Im eingebauten Zustand ragt nur ein kleiner Teil der Baugruppe 3,4 aus der Seitenwand 5 - wie in FIG 1 dargestellt - heraus. Zu den gegenüberliegenden parallelen Seitenwänden 6 ist dagegen der Kontaktträger 10 dicht benachbart, damit der Anker 4 bereits nach geringem Verschwenken in dessen Freiraum 9 eintaucht. Die Konstruktion erfordert es also, daß die mechanische Wendekombination unter Verbindung der Verbindungsseitenwand 5 des Schaltgeräts 1 mit der Verbindungsseitenwand 6 des zweiten Schaltgeräts 2 realisiert wird. Um dies sicherzustellen, ist das Lager 3 durch hammerkopfförmige Ausbildung formkodiert und die ersten Schlitze 7 in den Verbindungsseitenwänden 5,6 sind zur formschlüssigen Aufnahme des Lagers 3 angepaßt ausgeführt - wie es FIG 6 andeutet. Die Formkodierung garantiert einen lagerichtigen Einbau der mechanischen Wendekombination.

## Patentansprüche

1. Schaltgeräteeinheit aus einem ersten (1) und einem zweiten (2) gemeinsam mit einer Wendekombination versehenen Schaltgerät mit folgenden Merkmalen:
a) die Wendekombination umfaßt ein Lager (3) und einen in diesem schwenkbar gelagerten Anker (4),
b) das erste Schaltgerät (1) ist über dessen erster Verbindungsseitenwand (5) mit dem zweiten Schaltgerät (2) an dessen zweiter Verbindungsseitenwand (6) verbunden,
c) in den Verbindungsseitenwänden (5,6) sind gegenüberliegend erste Schlitze (7) vorhanden, in denen das Lager (3) steckt,
d) zur Aufnahme des Ankers (4) sind in den Verbindungsseitenwänden (5,6) gegenüberliegend zweite Schlitze (8) vorhanden,
e) wobei der Anker (4) beim gleichzeitigen Betätigen beider Schaltgeräte (1,2) in die Kontaktträger (10) beider Schaltgeräte (1,2) eingreift und ein Einschalten beider Schaltgeräte (1,2) verhindert, während der Anker (4) beim Betätigen eines der beiden Schaltgeräte (1 oder 2) in den Kontaktträger (10) des anderen Schaltgeräts (1 oder 2) gedrückt wird und diesen verriegelt.

2. Schaltgeräteeinheit nach Anspruch 1, **dadurch gekennzeichnet**, daß zur Verbindung der beiden Schaltgeräte (1,2) Verbindungselemente (11) vorhanden sind, die Rippen (14) an den Schaltgeraten (1,2) klammerartig umgreifen.

3. Schaltgeräteeinheit nach Anspruch 1 oder 2,
**dadurch gekennzeichnet**, daß die Verbindungselemente (11) zwei äußere Schenkel (12) zur Umklammerung der Verbindungsseitenwände (5,6) sowie einen Mittelzapfen (13) aufweisen, der in eine durch die Verbindungsseitenwände (5,6) gebildete Ausnehmung (15) formschlüssig eingreift.

4. Schaltgeräteeinheit nach einem der vorangehenden Ansprüche, **dadurch gekennzeichnet**, daß das Lager (3) formkodiert ausgebildet ist und die ersten Schlitze (7) zur Aufnahme des Lagers (3) der Formkodierung angepaßt sind.

## Claims

1. Switchgear unit comprising a first switching device (1) and a second switching device (2) which are jointly provided with a reversing combination and have the following features:
a) the reversing combination comprises a support (3) and an anchor (4) which is mounted in this support (3) such that it can pivot,
b) the first switching device (1) is connected via its first connecting side wall (5) to the second connecting side wall (6) of the second switching device (2),
c) the connecting side walls (5, 6) have opposite first slots (7) into which the support (3) is inserted,
d) the connecting side walls (5, 6) have opposite second slots (8) for accommodating the anchor (4),
e) in which case, when the two switching devices (1, 2) are operated at the same time, the anchor (4) engages in the contact carriers (10) of both switching devices (1, 2) and prevents both switching devices (1, 2) from being switched on, while, when one of the two switching devices (1 or 2) is operated, the anchor (4) is pressed into the contact carrier (10) of the other switching device (1 or 2) and interlocks it.

2. Switchgear unit according to Claim 1, characterized in that the two switching devices (1, 2) are connected by connecting elements (11) which engage like brackets around the ribs (14) on the switching devices (1, 2).

3. Switchgear unit according to Claim 1 or 2, characterized in that the connecting elements (11) have two outer limbs (12) for engaging around the connecting side walls (5, 6), as well as a centre pin (13) which engages in a positively locking manner in a recess (15) which is formed by the connecting side walls (5, 6).

4. Switchgear unit according to one of the preceding claims, characterized in that the support (3) is designed to be shape-coded, and the first slots (7) for accommodating the support (3) are matched to the shape coding.

## Revendications

1. Interrupteur (1) électrique de puissance, comportant un ensemble (2) de contact mobile et comportant un dispositif (7) d'entraînement qui actionne l'ensemble (2) de contact pour sa mise en et hors circuit et qui est articulé à l'ensemble (2) de contact par un levier (11) de commande, un perçage (16) transversal étant disposé dans un support (6) de levier de contact isolant de l'ensemble (2) de contact, perçage qui est destiné à recevoir un axe (17) de palier reliant le levier (11) de commande à l'ensemble (2) de contact, l'axe (17) de palier étant empêché d'être retiré du perçage (16) transversal par une vis (22) de blocage,
**caractérisé** en ce qu'une pièce (15) de blocage, réalisée en matériau isolant et bloquant axialement l'axe (17) de palier, est fixée sur le support (6) de levier de contact au moyen de la vis (22) de blocage.

2. Interrupteur de puissance suivant la revendication 1, **caractérisé** en ce que la vis (22) de blocage est disposée en s'engageant dans une ouverture (23) réceptrice disposée perpendiculairement au perçage (16) transversal et en se terminant à distance de l'axe (17) de palier.

3. Interrupteur de puissance suivant la revendication 1 ou 2, **caractérisé** en ce que la pièce (15) de blocage est conçue comme organe de protection pour recouvrir une ouverture (14) de montage du support (6) de levier de contact qui donne accès à une partie (21) de tête de l'axe (17) de palier.

4. Interrupteur de puissance suivant la revendication 3, **caractérisé** en ce que la pièce (15) de blocage comporte une nervure (26) pour l'appui mutuel d'une partie (20) médiane de blocage placée devant la partie (21) de tête de l'axe (17) de palier, et d'une branche (24) de fermeture remplissant l'ouverture (14) de montage.
